# EUROPÄISCHE PATENTSCHRIFT

(11) **EP 2 431 725 B1**
(45) Veröffentlichungstag und Bekanntmachung des Hinweises auf die Patenterteilung: **28.11.2012**
(21) Anmeldenummer: 10177957.7
(22) Anmeldetag: 21.09.2010
(51) Int. Cl.: G01M 7/08, G01N 3/307, G01N 3/32

(54) **Prüfvorrichtung zur Simulation eines realen Hagelbeschusses von Testobjekten**
Testing device for simulating the effect of hail falling on a test object
Dispositif de contrôle destiné à la simulation d'une averse de grêle réelle à partir d'objets tests

(43) Veröffentlichungstag der Anmeldung: 21.03.2012
(73) Patentinhaber: Hans Höllwart Forschungszentrum für Integrales Bauwesen AG, 8152 Stallhofen (AT)
(72) Erfinder: Wascher, Heinz, A-8052 Graz (AT)
(74) Vertreter: Margotti, Herwig Franz

(56) Entgegenhaltungen:
- US-A1- 2004 112 353
- US-A1- 2010 153 078

## Beschreibung

Die Erfindung betrifft eine Prüfvorrichtung zur Simulation eines realen Hagelbeschusses von Testobjekten, insbesondere von Bauteilen eines Gebäudes, mittels Geschossen.

Hagelstürme verursachen jedes Jahr weltweit enorme Schäden in der Landwirtschaft, an Gebäuden sowie an Fortbewegungsmitteln wie beispielsweise an Fahrzeugen oder Flugzeugen. Im Alpenraum, in der Schweiz, in Österreich sowie in Deutschland hat die Häufigkeit des Auftretens von Hagelunwettern in den vergangenen Jahren zugenommen. Der Anstieg an Hagelschäden an Gebäuden lässt sich dabei auf mehrere Faktoren zurückführen, zu nennen sind die Zersiedelung in hagelgefährdeten Regionen, die Verwendung von Baumaterialien, welche sehr hagelempfindlich sind, sowie das Auftreten häufiger und lang andauernder Hagelschauer, welche intensiver als in der Vergangenheit auftreten. Versicherer werden durch Hagelschäden daher vor immer größer werdende Herausforderungen gestellt.

Weltweit gibt es bereits zahlreiche Prüfvorschriften zur Klassifizierung der Widerstandsfähigkeit bestimmter Materialien gegen Hagelschlag. Für eine erste Abschätzung des Hagelwiderstands von Gebäudebauteilen wird meist der durchschnittliche Durchmesser der Hagelkörner herangezogen.

Neben der Größe des Hagelkorns beeinflussen jedoch die folgenden weiteren Faktoren maßgeblich die Schwere eines Hagelschadens: Hageldauer, Dichte des Hagelkorns, Form des Hagelkorns, Intensität des Hagelschlags, vertikale Fallgeschwindigkeit der Hagelkörner und somit deren Aufprallenergie, Aufprallwinkel, horizontale und vertikale Windgeschwindigkeit sowie die Materialeigenschaften der potentiellen Schadensgüter wie beispielsweise der Fassadenbauteile von Gebäuden.

Durch eine geeignete Auswahl der verwendeten Materialien können beispielsweise für eine Gebäudehülle, für Photovoltaik-Installationen, thermische Solaranlagen sowie bei Dachabdichtungen Schäden durch Hagelanprall reduziert bzw. verhindert werden.

Hagel wird beispielsweise in der Schweizer Norm SIA 261/1 ("Einwirkung auf Tragwerke") in ihrer Fassung aus dem Jahr 2003 als außergewöhnliche Last angenommen und somit als Einzellast angesehen. Mittels Hagelprüfung werden Baustoffe in die entsprechenden Hagelwiderstandsklassen eingeteilt und sind danach im schweizerischen Elementarschutzregister als zugelassene Baustoffe erfasst.

In der Schweiz erfolgt die Hagelprüfung der Materialien derzeit ausschließlich durch Einzelbeschuss. Der Beschusswinkel ist dabei abhängig vom Einsatzort der Materialien, welcher im Falle eines Dachmaterials bei 90° und bei Fassadenmaterialien bei 45° liegt. Die Projektile - es werden dazu kugelförmige Eisbälle aus demineralisiertem Wasser mit bekannter Masse und einer Temperatur von 20°C verwendet - können bei der Prüfung vertikal, horizontal oder schräg auf das Prüfmaterial geschossen werden.

Aus dem Stand der Technik sind unterschiedliche Ausführungen an Hageltestvorrichtungen bekannt:
Im Dokument CN 101 451 798 A wird beispielsweise eine Prüfvorrichtung zur Simulation von Hagelbeschuss bei Flugzeugen gezeigt. Dazu wird eine Gasdruckkanone mit einem Hagelkorn befüllt und ein zu testendes Material mit dem Hagelkorn beschossen. Neben Eiskugeln werden auch Kunststoffkugeln aus PTFE und Nylon als zum Abschuss mit der Hagelkanone geeignet genannt.

Aus JP 2005 055215 A ist ebenfalls eine einfache Hagelkanone als Prüfvorrichtung bekannt, die einen Abschusszylinder zum Abfeuern eines Eisballs mittels Gasdruck umfasst. Die Hagelkanone weist dazu ein Öffnungs- und Schließventil sowie einen Gaseinlasszylinder auf. Der Gaseinlasszylinder ist mit dem Abschusszylinder verbunden, wobei der Gaseinlasszylinder einen kleineren Innendurchmesser als der Abschusszylinder aufweist.

Aus CA 2 436 559 C ist ebenfalls eine Abschussvorrichtung für einen Eisball bekannt, wobei hier auch mehrere Eisbälle, welche in derselben Größe vorbereitet wurden, nacheinander mit jeweils derselben einstellbaren Geschwindigkeit bzw. kinetischen Energie auf ein zu prüfendes Probenmaterial geschossen werden können. Mittels zweier voneinander beabstandeter Lichtsensoren, beispielsweise Lasersensoren, die entlang der Flugbahn des Eisballes angeordnet sind, wird dabei die exakte Geschwindigkeit der Bälle erfasst.

US 5,319,946 A zeigt eine Vorrichtung zum Lagern und Transportieren von Eisbällen, um diese hintereinander auf ein Ziel, beispielsweise ein zu prüfendes Material zu schießen. Eisbälle werden dabei in einem mit einer Archimedes-Schraube versehenen Behälter gelagert und mittels Pressluft durch eine Schlauchleitung in eine Hagelkanone gefördert, von wo sie hintereinander abgefeuert werden.

Bei diesen aus dem Stand der Technik bekannten Hagelprüfungen werden entweder Bälle aus Eis, Gummi, Kompositmaterialien (wie beispielsweise Baumwolle mit gefrorenem Wasser), Blei oder Stahl verwendet, um den Hagelbeschuss von Fahrzeug- oder Flugzeugteilen zu simulieren. Ein wesentlicher Nachteil dieser Hagelprüfvorrichtungen besteht darin, dass von den Hagelkanonen jeweils nur ein einzelner Ball abgefeuert wird.

Die weiteren Faktoren, welche maßgeblich die Schwere eines Hagelschadens bestimmen, wie Hageldauer, Form und Korngrößenverteilung des Kollektivs der Hagelkörner sowie die (kumulierte) Intensität des Hagelschlags bleiben gänzlich unberücksichtigt.

Eine Simulation der realen Rahmenbedingungen, welche tatsächlich während eines Hagelschauers auftreten, wie beispielsweise auch die Überlagerung der Aufprallkräfte eines Kollektivs von mehreren Hagelkörnern mit den im Realfall auftretenden Windkräften, ist mit solchen Hagelkanonen daher keinesfalls möglich. All diese Prüfverfahren liefern somit für die zu untersuchenden Prüfmaterialien höchstens eine grobe Abschätzung der Auswirkungen des realen Hagelbeschusses.

Um die Nachteile derjenigen Prüfverfahren, bei denen jeweils nur mit einem einzelnen Ball auf ein Prüfobjekt geschossen wird, zu überwinden, wird im Dokument US 2009/0326835 A1 vorgeschlagen, zur Datenerfassung der dynamischen Kräfte während eines Hagelbeschusses ein dynamisches Testsystem mit Sensorflächen zu verwenden. Die Sensorflächen dieses Testsystems sind beispielsweise an der Karosserie eines Fahrzeugs befestigbar. Im Feldtest werden während einer Fahrt mittels der am Fahrzeug befestigten Sensorflächen die dynamischen Kräfte des Hagelbeschusses erfasst und vom Testsystem aufgezeichnet. Prüfobjekte, beispielsweise Testmaterialien von Gebäudefassaden, werden ebenfalls am Fahrzeug befestigt und somit dem Hagelbeschuss ausgesetzt.

Von der Sensorschicht der Sensorflächen wird dabei ein elektrisches Signal in Abhängigkeit von der Stärke des Hageleinschlags generiert. Hier wird also - umgekehrt zu den zuvor genannten Prüfmethoden, bei denen mit stationären Hagelkanonen auf Testmaterialien geschossen wird - die Sensorschicht als Teil des Testsystems bzw. ein Prüfobjekt selbst bewegt und mit realen Hagelkörnern beschossen.

Nachteilig an dieser Ausführung ist, dass auf einem Fahrzeug nur vergleichsweise kleine und leichte Prüfobjekte überhaupt befestigbar und somit überhaupt testbar sind. Eine Vermessung der maßstabsgetreuen Belastung von größeren Prüfmaterialien, beispielsweise von kompletten Fassadenpaneelen oder Vorhangfassaden ist mit diesem dynamischen Testsystem nicht möglich.

Weiters ist der Einsatz eines solchen dynamischen Testverfahrens äußerst kostenintensiv und besonders zeitaufwendig. Um während der meist kurzen Dauer eines Hagelunwetters von einigen Minuten überhaupt eine entsprechende Testfahrt durchführen und ein Prüfobjekt vermessen zu können, ist dazu eine sehr große Anzahl an identen Testfahrzeugen erforderlich, die während der Hagelsaison in Gebieten mit der höchsten Hagelschauer-Wahrscheinlichkeit jeweils mit einem zu untersuchenden Prüfobj ekt bereit stehen.

Es ist somit Aufgabe der vorliegenden Erfindung, eine Prüfvorrichtung zur Simulation von Hagelschlag zu schaffen, welche die zuvor genannten Nachteile des Stands der Technik überwindet und mit der die Hagelbelastung eines oder mehrerer Testobjekte unter realen Bedingungen kostengünstig sowie reproduzierbar gemessen werden kann. Mit der Prüfvorrichtung soll weiters ein flächendeckender Beschuss von maßstabsgetreuen Testobjekten auch während einer längeren Zeitspanne möglich sein.

Diese Aufgaben werden bei einer Prüfvorrichtung gemäß dem Oberbegriff des Anspruches 1 mit den Merkmalen des kennzeichnenden Teiles des Anspruchs 1 gelöst. Die Unteransprüche betreffen besonders vorteilhafte Ausgestaltungen der Erfindung.

Besonders vorteilhaft sind bei einer erfindungsgemäßen Prüfvorrichtung zur Simulation eines realen Hagelbeschusses von Testobjekten, insbesondere von Bauteilen eines Gebäudes, mittels Geschossen, mehrere Abschussvorrichtungen zum simultanen Abschießen der Geschosse vorgesehen, wobei für die Abschussvorrichtungen eine Summenhagellast als Energieeintrag der Summe aller Geschosse sämtlicher Abschussvorrichtungen je Beschussfläche eines Testobjekts und je Zeiteinheit einstellbar ist.

Die gesamte Summenhagellast aller Geschosse der Prüfvorrichtung je Beschussfläche des Testobjekts und je Zeiteinheit weist die Einheit [Joule] je [m²] Beschussfläche und je [s] als Zeiteinheit auf. Die Einheit der Summenhagellast beträgt somit [kg / s³].

Vorteilhaft gegenüber dem bekannten Stand der Technik ist weiters, dass durch ein simultanes Auftreffen mehrerer Geschosse auf der Beschussfläche das Testobjekt in Schwingungen versetzt werden kann, wie sie auch den während eines Hagelunwetters auftretenden realen Schwingungen von Bauteilen entsprechen. Die dabei auf das Testobjekt einwirkende resultierende Kraft ergibt sich aus der Überlagerung der Summenhagellast der von der Prüfvorrichtung abgefeuerten Geschosse sowie der Schwingungslast. Diese überlagerte resultierende Kraft kann verglichen mit einem Einzelbeschuss entscheidend höher sein und entspricht somit im Wesentlichen den realen Belastungen, die während eines Hagelunwetters tatsächlich auf Bauteile, beispielsweise auf Fassadenbauteile einwirken.

Im Rahmen der Erfindung können als Geschosse beispielsweise Eiskörner als Überbegriff für Eiskugeln, Eisbälle und dergleichen, sowie sämtliche aus dem Stand der Technik bekannte für eine Hagelprüfung standardisierte Testgeschosse aus Kunststoff, Holz, Metall oder Elastomer mit gleichem oder unterschiedlichem Geschossdurchmesser eingesetzt werden.

Zweckmäßig ist bei einer erfindungsgemäßen Prüfvorrichtung für jede einzelne Abschussvorrichtung jeweils eine individuelle Einzelhagellast als Energieeintrag der Summe aller Geschosse der jeweiligen Abschussvorrichtung je Beschussfläche des Testobjekts und je Zeiteinheit einstellbar.

In dieser Ausfiihrungsvariante ist für jede einzelne Abschussvorrichtung eine individuelle Einzelhagellast mit der Einheit [kg / s³] einstellbar bzw. angebbar.

In einer Weiterbildung der Erfindung sind bei einer Prüfvorrichtung mehrere Abschussvorrichtungen voneinander beabstandet an einem schwenkbaren Rahmen, welcher parallel zur Beschussfläche des Testobjektes ausrichtbar ist, befestigt.

Vorteilhaft wird somit gewährleistet, dass jedes Geschoss jeweils die gleiche Entfernung bis zur Beschussfläche des Testobjekts hat.

Zweckmäßig sind bei einer Prüfvorrichtung gemäß der Erfindung mindestens zehn Abschussvorrichtungen je Quadratmeter Rahmenfläche gleichmäßig an dem schwenkbaren Rahmen angeordnet.

Durch die gleichmäßige dichte Anordnung der Abschussvorrichtungen am Rahmen wird ein flächendeckender Beschuss der Beschussfläche ermöglicht, wie er auch während eines Hagelunwetters auftritt.

Besonders vorteilhaft sind bei einer Prüfvorrichtung mit den Abschussvorrichtungen Geschosse mit unterschiedlichem Äquivalent-Durchmesser, vorzugsweise mit Äquivalent-Durchmesser von 5 mm bis 200 mm, abschießbar.

Der Äquivalent-Durchmesser ist ein Maß für die Größe eines unregelmäßig geformten Geschosses wie beispielsweise eines Hagelkorns. Er berechnet sich aus dem Vergleich einer Eigenschaft des unregelmäßigen Teilchens, welches von der Kugelform abweicht, mit einer Eigenschaft eines regelmäßig geformten bzw. kugelförmigen Teilchens. Hier wird im Weiteren Bezug genommen auf den sogenannten geometrischen Äquivalent-Durchmesser, den man durch Bestimmung des Durchmessers einer Kugel mit gleicher geometrischer Eigenschaft bzw. mit gleichem Volumen wie das unregelmäßig geformte Partikel erhält.

In einer erfindungsgemäßen Ausführungsvariante der Prüfvorrichtung ist zumindest eine Abschussvorrichtung in ihrem Abschusswinkel in horizontaler und/oder in vertikaler Richtung verstellbar.

In einer vorzugsweisen Ausführungsform einer erfindungsgemäßen Prüfvorrichtung ist vorgesehen, dass alle Abschussvorrichtungen in horizontaler und/oder vertikaler Richtung verstellbar sind.

Besonders zweckmäßig sind bei einer Prüfvorrichtung die Abschussgeschwindigkeiten der Geschosse jeder Abschussvorrichtung einstellbar.

Zweckmäßig sind bei einer Prüfvorrichtung gemäß der Erfindung die Abschussvorrichtungen jeweils mit einem Antrieb, vorzugsweise mit einem Pneumatik-Antrieb, zum Erzeugen einer Abschusskraft verbunden.

Eine Prüfvorrichtung kann unterschiedliche Antriebskonzepte aufweisen. Beispielsweise kann der Antrieb der Geschosse mechanisch mittels Federkraft erfolgen. Besonders bewährt hat sich ein Pneumatikantrieb, wobei beispielsweise ein zentraler Kompressor zur Erzeugung der Druckluft vorgesehen ist und mittels Pneumatik-Leitungen mit jeder Abschussvorrichtung verbunden ist. Ein Pneumatik-Antrieb umfasst dazu beispielsweise einen Luftdruckbehälter und ein Schnellentlüfterventil. Im Falle eines Pneumatik-Antriebs entspricht die Abschusskraft der einzelnen Abschussvorrichtungen jeweils einem Abschussdruck.

Vorteilhaft sind bei einer erfindungsgemäßen Prüfvorrichtung die Abschussgeschwindigkeiten der Geschosse mittels eines Abschusskraftreglers je Abschussvorrichtung individuell einstellbar.

Im Falle eines Pneumatik-Antriebs entspricht der Abschusskraftregler einem Abschussdruckregler. Mit den Abschusskraftreglern lassen sich die Abschussgeschwindigkeiten der Geschosse besonders komfortabel individuell regeln.

In einer Weiterbildung der Erfindung sind bei einer Prüfvorrichtung, welche eine Prozessoreinheit umfasst, vom Abschusskraftregler Steuersignale zur Steuerung der Abschusskraft je Abschussvorrichtung an die Prozessoreinheit sendbar.

Im Falle eines Pneumatik-Antriebs entspricht das Steuersignal einem Drucksignal und die Abschusskraft einem Abschussdruck.

Es ist bevorzugt, eine Prüfvorrichtung gemäß der Erfindung mit zumindest einem Geschwindigkeitsmessgerät zur Geschwindigkeitserfassung der Geschosse auszustatten.

Im Rahmen der Erfindung kann auch für jede einzelne Abschussvorrichtung jeweils ein eigenes Geschwindigkeitsmessgerät vorgesehen sein. Es können dazu sämtliche aus dem Stand der Technik bekannte Geschwindigkeitsmessgeräte, beispielsweise Lichtschranken, Laser- oder Radarmessgeräte eingesetzt werden.

Besonders vorteilhaft sind bei einer Prüfvorrichtung gemäß der Erfindung vom zumindest einen Geschwindigkeitsmessgerät die erfassten Geschwindigkeitsmesssignale an die Prozessoreinheit sendbar.

In einer weiteren Fortbildung der erfindungsgemäßen Prüfvorrichtung ist vorgesehen, dass die Prozessoreinheit die erfassten Geschwindigkeitsmesssignale auswertet und anhand der Auswertung die Abschussgeschwindigkeiten der Abschussvorrichtungen steuert.

Dies kann auf unterschiedliche Arten erfolgen. Beispielsweise umfasst die Auswertung der erfassten Geschwindigkeitsmesssignale zur Steuerung der Abschussgeschwindigkeiten einen Vergleich mit vorgespeicherten Geschwindigkeitsmesssignalen von Testprüfungen. Die vorgespeicherten Geschwindigkeitsmesssignalen von Testprüfungen sind dazu beispielsweise in Datenbanken, auf die von der Prozessoreinheit zugegriffen wird, archiviert.

In einer Weiterbildung der Erfindung ist bei einer Prüfvorrichtung zumindest ein Vorratsbehälter mit Geschossen vorgesehen, welcher mit jeder Abschussvorrichtung mit Geschosszuführleitungen verbunden ist.

Abhängig von den verwendeten Geschossen kann es beispielsweise bei Eiskörnern erforderlich sein, dass der zumindest eine Vorratsbehälter entsprechend gekühlt wird bzw. thermostatisierbar ausgerüstet ist. Vorteilhaft ist mit einem Vorratsbehälter, der als Speicher für die Geschosse dient und mit jeder Abschussvorrichtung mit Geschosszufiihrleitungen verbunden ist, ein automatisierter Dauerbeschuss eines Testobjekts möglich. Somit kann das Testobjekt unter realen Testbedingungen, wie sie auch während eines länger andauernden Hagelunwetters auftreten, geprüft werden.

Zweckmäßig ist bei einer Prüfvorrichtung gemäß der Erfindung jede Abschussvorrichtung automatisch mit jeweils einem Geschoss seriell beladbar.

In dieser Ausführung einer Prüfvorrichtung wird wirkungsvoll verhindert, dass nachteilhaft gleichzeitig mehrere Geschosse in eine Abschussvorrichtung gelangen und gemeinsam innerhalb derselben Abschussvorrichtung mit einer nicht definierbaren Einzelhagellast abgefeuert werden. Den Ausfiihrungsmöglichkeiten, die ein ausschließlich serielles Befüllen jeder einzelnen Abschussvorrichtung gewährleisten, sind keine Grenzen gesetzt. Beispielsweise kann die serielle Beladung der Abschussvorrichtungen mittels optischer oder mechanischer Kontrollvorrichtungen überwacht werden. Die Beladung der Abschussvorrichtungen mit den Geschossen erfolgt beispielsweise pneumatisch.

In einer besonders kompakten Ausführungsform einer erfindungsgemäßen Prüfvorrichtung ist vorgesehen, dass zum parallelen Abfahren der Beschussfläche eines Testobjekts die Prüfvorrichtung an einer Hebevorrichtung befestigbar ist.

Als externe Hebevorrichtungen können beispielsweise ein Hubstapler oder ein Kran dienen. Somit ist es möglich, die Prüfvorrichtung entlang eines großflächigen Testobjekts, beispielsweise einer Fassade oder eines Dachs eines Gebäudes, gleichmäßig flächendeckend zu bewegen. Die Beschussfläche des Testobjekts wird solcherart von der Prüfvorrichtung gleichmäßig mit einer Hagellast beaufschlagt. Vorteilhaft ist die Prüfung von Testmaterialien eines Testobjekts daher in jeder Höhenlage bzw. in jedem Winkel möglich. Schräge Dachflächen oder Fassadenflächen von Großobjekten können mit einer erfindungsgemäßen Prüfvorrichtung ebenso auf ihre Hagelwiderstandfähigkeit getestet werden wie kleine Testobjekte.

In einer weiteren besonders zweckmäßigen Ausführungsform der Erfindung sind bei einer Prüfvorrichtung zumindest eine dynamische Windlasterzeugungs-Vorrichtung und/oder eine statische Windlasterzeugungs-Vorrichtung und/oder eine Wasserstrahlerzeugungs-Vorrichtung und/oder eine Thermostatisierungs-Vorrichtung zur Überlagerung mit der Hagellast vorgesehen.

Eine Prüfvorrichtung in dieser vorteilhaften Ausführung ist besonders zur Simulation der Witterungsbedingungen während eines realen Hagelschauers geeignet. Eine Überlagerung der Hagellast mit den mechanischen Belastungen von Wind, Schlagregen, Klimaeinflüssen wie beispielsweise Temperaturschwankungen und/oder Luftfeuchte ist somit möglich.

Eine Windlast ergibt sich aus der Druckverteilung um ein Testobjekt, beispielsweise ein Bauwerk, welches einer Windströmung ausgesetzt ist. Als Windlasterzeugungs-Vorrichtung können beispielsweise ein Gebläse oder eine Turbine dienen. Diese können direkt an der Prüfvorrichtung angeordnet sein oder bei Bedarf modulartig mit der Prüfvorrichtung kombiniert werden. Weiters können im Rahmen der Erfindung auch mehrere Windlasterzeugungs-Vorrichtungen bei einer erfindungsgemäßen Prüfvorrichtung vorgesehen sein. So können Windlasterzeugungs-Vorrichtungen als Module einer Prüfvorrichtung beispielsweise zur Erzeugung einer dynamischen Windlast und/oder einer statischen Windlast dienen.

Unter einer dynamischen Windlast werden jene dynamischen Wechselwirkungskräfte verstanden, die durch die Anströmung bzw. Umströmung eines Testobjekts in der Windströmung entstehen und in Form von Schwingungen auf das Testobjekt einwirken.

Als statische Windlast wird jene Flächenlast bezeichnet, welche im Allgemeinen senkrecht zur Windangriffsfläche auftritt und sich vor allem aus Druck- und Sogwirkungen zusammensetzt. So entsteht bei einem Bauwerk an den frontal angeströmten Flächen durch die Strömungsverlangsamung ein Überdruck. Im Bereich der Dach- und Seitenflächen löst sich die Luftströmung an den Gebäudekanten ab und bewirkt dort einen Unterdruck bzw. Sog. Durch den Nachlaufwirbel wird an der Gebäuderückseite ebenfalls ein Unterdruck erzeugt.

Zur Simulation einer statischen Windlast, die als Überdruck oder Unterdruck auf das Testobjekt einwirkt, werden meist aus dem Stand bekannte Druckprüfkammern verwendet, in denen sich das zu untersuchende Testobjekt befindet. Zur Simulation der statischen Windlast, die auf große Gebäudeteile einwirkt, werden Fassadenprüfstände verwendet, die mit Überdruck bzw. Unterdruck beaufschlagt werden.

Wenn die erfindungsgemäße Prüfvorrichtung mit einer statischen Windlasterzeugungs-Vorrichtung versehen ist, so kann in einer externen Druckprüfkammer oder einem externen Fassadenprüfstand während des Hagelbeschusses auch eine Überlagerung mit Druck- und Sogwirkungen auf die Testobjekte simuliert werden.

Jedenfalls ist die erfindungsgemäße Prüfvorrichtung in entsprechenden Druckprüfkammern oder bei Fassadenprüfständen einsetzbar.

Als Wasserstrahlerzeugungsvorrichtung zur Simulation von Schlagregen können beispielhaft Hochdruckwasserspritzen vorgesehen sein.

Unter einer Thermostatisierungsvorrichtung wird beispielsweise ein Heizregister oder eine entsprechende Kühlanlage verstanden, die jeweils zur Überlagerung von Temperaturschwankungen mit der Hagellast vorgesehen sind.

Somit ist es möglich, mit der erfindungsgemäßen Prüfvorrichtung sämtliche klimatische Rahmenbedingungen zu simulieren, welche vor und nach einem Hagelereignis auftreten.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- Fig. 1 in einer vereinfachten Darstellung von der Seite eine erste Ausführungsform einer erfindungsgemäßen Prüfvorrichtung;
- Fig. 2 in einem Blockfließbild im Detail die in Fig. 1 dargestellte erfindungsgemäße Prüfvorrichtung mit den für einen automatisierten Betrieb erforderlichen Steuereinrichtungen.

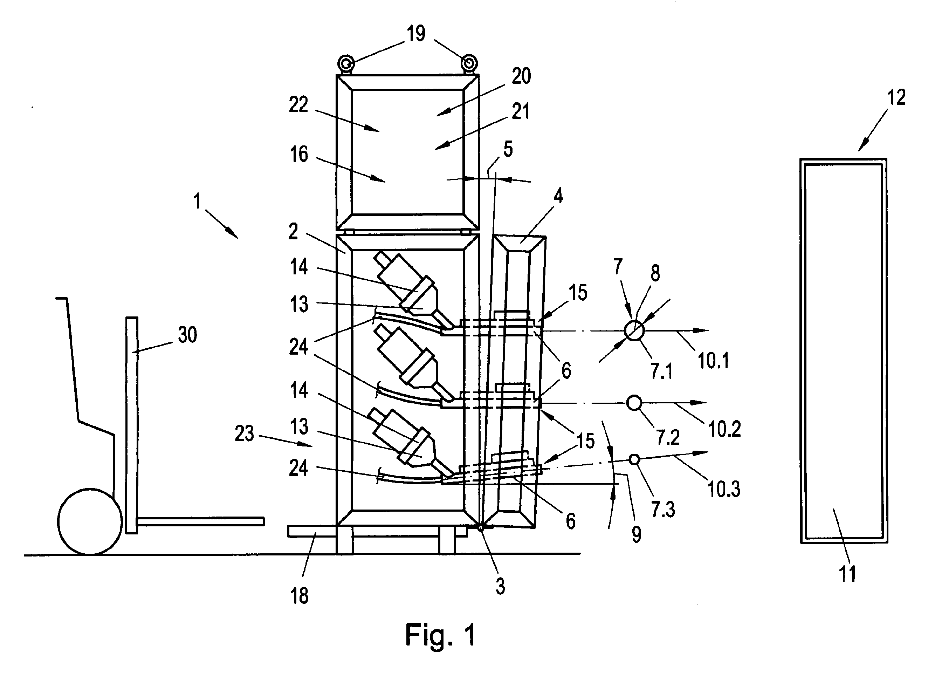

Fig. 1 zeigt eine erste Ausführungsform einer erfindungsgemäßen Prüfvorrichtung 1 mit einem Traggerüst 2 sowie einem am Traggerüst 2 mit einem Rahmenscharnier 3 schwenkbar beweglich befestigten Rahmen 4. Der Rahmen 4 kann dabei gegenüber dem Traggerüst 2 um einen Schwenkwinkel 5 verschwenkt werden. Am Rahmen 4 sind mehrere Abschussvorrichtungen 6 zum Abschießen von Geschossen 7 verstellbar befestigt. Von den mehreren Abschussvorrichtungen 6, die gleichmäßig am Rahmen 4 angeordnet sind, können die Geschosse 7 simultan abgeschossen werden. Die hier in dieser Ausführung jeweils baugleichen Abschussvorrichtungen 6 sind zum Abfeuern von Geschossen 7 mit unterschiedlichem Äquivalent-Durchmesser 8, beispielsweise mit einem Äquivalent-Durchmesser 8 von 5 mm bis 200 mm geeignet. Die in Fig. 1 schematisch gezeigten Geschosse 7.1, 7.2, 7.3, welche hier beispielsweise aus Eis hergestellt und von kornförmiger Gestalt sind, weisen jeweils unterschiedliche Äquivalent-Durchmesser 8 auf. Die Abschussvorrichtungen 6 können in ihrem Abschusswinkel 9 jeweils sowohl in horizontaler, als auch in vertikaler Richtung verstellt werden. Somit wird gewährleistet, dass sämtliche Geschosse 7.1, 7.2, 7.3 in ihrer Abschussrichtung 10, welche in Fig. 1 als Pfeile 10.1, 10.2 sowie 10.3 gekennzeichnet sind, individuell eingestellt werden können. Da weiters der schwenkbare Rahmen 4 parallel zur Beschussfläche 10 des Testobjektes 11 ausrichtbar ist, kann die Prüfvorrichtung 1 daher so betrieben werden, dass sämtliche Geschosse 7.1, 7.2, 7.3 jeweils dieselbe Distanz zurücklegen müssen, um auf einer Beschussfläche 11 eines Testobjekts 12 aufzutreffen.

Jede Abschussvorrichtung 6 ist hier mit einem eigenen Antrieb 13 versehen. In der in Fig. 1 gezeigten Ausführungsform erfolgt der Antrieb der Abschussvorrichtungen 6 jeweils mittels eines Pneumatik-Antriebs 13. Ein zentraler Kompressor zur Erzeugung der Druckluft sowie die entsprechenden Pneumatikleitungen, die Druckluft vom Kompressor zu den einzelnen Pneumatik-Antrieben 13, welche beispielsweise jeweils einen Luftdruckbehälter und ein Schnellentlüfterventil umfassen, leiten, sind der besseren Übersicht wegen in Fig. 1 nicht dargestellt. Die Abschusskraft jeder Abschussvorrichtung 6 ist mittels eines Abschusskraftreglers 14 jeweils individuell einstellbar. Als Abschusskraftregler 14 werden hier beispielsweise Druckregler 14 verwendet.

Weiters ist jede Abschussvorrichtung 6 mit einem Geschwindigkeitsmessgerät 15 versehen, welches zur Geschwindigkeitserfassung der einzelnen Geschosse 7 dient. Die erfassten Geschwindigkeitsmesssignale jedes Geschwindigkeitsmessgeräts 15 werden mittels Signalleitungen an eine Prozessoreinheit 16 gesendet, welche die erfassten Geschwindigkeitsmesssignale auswertet und anhand der Auswertung die jeweiligen Abschusskraftregler 14 der Abschussvorrichtungen 6 und somit die Abschussgeschwindigkeiten der Geschosse 7 steuert. Ebenso werden von den Abschusskraftreglern 14 Steuersignale mittels Signalleitungen an die Prozessoreinheit 16 gesendet. Die Signalleitungen, welche mit der Prozessoreinheit 16 verbunden sind, sind der Übersicht halber in Fig. 1 nicht dargestellt.

Die Prüfvorrichtung 1 ist vorteilhaft mobil einsetzbar und kann zum parallelen Abfahren der Beschussfläche 11 eines Testobjekts 12, beispielsweise einer Fassade eines Gebäudes, an einer externen Hebevorrichtung 30, beispielsweise einem Hubstapler 30 oder einem Kran befestigt werden. Das Traggerüst 2 ist dazu mit entsprechenden Führungsholmen 18 zum Anheben mittels eines Hubstaplers 30 sowie mit Befestigungshaken 19 zum Anschlagen an einem Kran versehen.

Weiters ist die Prüfvorrichtung 1 mit einer Windlasterzeugungs-Vorrichtung 20, einer Wasserstrahlerzeugungs-Vorrichtung 21 sowie einer Thermostatisierungs-Vorrichtung 22 versehen. Mittels der Windlasterzeugungs-Vorrichtung 20, beispielsweise eines Gebläses, wird die Hagellast je Beschussfläche 11 des Testobjekts 12 sowohl mit einer simulierten dynamischen, als auch einer statischen Windlast überlagert. Die Wasserstrahlerzeugungs-Vorrichtung 21, beispielsweise eine Hochdruck-Wasserspritze, dient zur Überlagerung der Hagellast mit einer simulierten Wasser- bzw. Schlagregenlast. Die Thermostatisierungs-Vorrichtung 22 ist beispielsweise als Heizstrahler ausgebildet und dient zur Überlagerung der Hagellast, die auf die Beschussfläche 11 einwirkt, mit einer simulierten Temperaturänderung, die ebenfalls belastend auf das zu untersuchende Material des Testobjekts 12 wirkt.

Ebenso ist es denkbar, eine erfindungsgemäße Prüfvorrichtung neben einer Windlasterzeugungs-Vorrichtung zur Simulation einer dynamischen Windlast zusätzlich mit einer weiteren Windlasterzeugungs-Vorrichtung zur Simulation einer statischen Windlast, also eines Überdrucks oder Unterdrucks, der auf das Testobjekt 12 einwirkt, auszustatten. Diese Ausführung wird hier nicht explizit gezeigt.

Um einen länger andauernden, flächendeckenden Hagelbeschuss der Beschussfläche 11 des Testobjekts 12 zu gewährleisten, ist die Prüfvorrichtung 1 weiters mit einem Vorratsbehälter 23 zur Lagerung der Geschosse 7 ausgestattet. Wenn als Geschosse 7 Eiskörner verwendet werden, so ist zweckmäßig der Vorratsbehälter 23 entsprechend mit einer Isolierung bzw. Kühlung zu versehen. Der Vorratsbehälter 23 ist mit Geschosszuführleitungen 24 mit jeder einzelnen Abschussvorrichtung 6 verbunden.

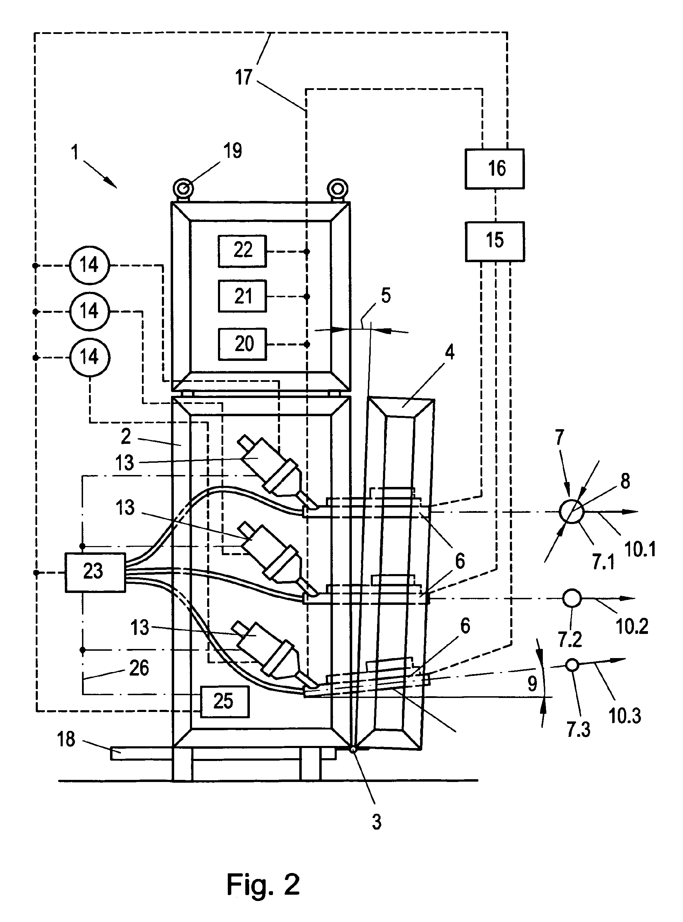

Fig. 2 zeigt die erfindungsgemäße Prüfvorrichtung 1 mit den für einen automatisierten Betrieb erforderlichen Steuereinrichtungen in Blockdarstellung.

Jede Abschussvorrichtung 6 ist mit einem Geschwindigkeitsmessgerät 15 versehen, welches zur Geschwindigkeitserfassung der einzelnen Geschosse 7 dient. Die erfassten Geschwindigkeitsmesssignale jedes Geschwindigkeitsmessgeräts 15 werden mittels Signalleitungen 17 an die Prozessoreinheit 16 gesendet, von welcher die erfassten Geschwindigkeitsmesssignale ausgewertet und anhand der Auswertung die jeweiligen Abschusskraftregler 14 der Abschussvorrichtungen 6 und somit die Abschussgeschwindigkeiten der Geschosse 7 gesteuert werden. Ebenso werden von den Abschusskraftreglern 14 Steuersignale mittels Signalleitungen 17 an die Prozessoreinheit 16 gesendet. Von der Prozessoreinheit 16 werden weiters die Windlasterzeugungs-Vorrichtung 20, die Wasserstrahlerzeugungs-Vorrichtung 21 sowie die Thermostatisierungs-Vorrichtung 22 gesteuert. Weiters wird der Füllstand des Vorratsbehälters 23 von der Prozessoreinheit 16 überwacht. Die Befüllung der Geschosse 7 aus dem Vorratsbehälter 23 mittels der Geschosszuführleitungen 24 in die jeweiligen Abschussvorrichtungen 6 erfolgt hier pneumatisch. Dabei wird von der Prozessoreinheit 16 weiters überwacht, dass nur jeweils ein einziges Geschoss 7 in der Abschussvorrichtung 6 vorhanden ist. Ein Kompressor als Pneumatik-Antrieb 25 ist mittels Pneumatik-Leitungen 26 mit dem Vorratsbehälter 23 sowie mit den Antrieben 13 der Abschussvorrichtungen 6 verbunden.

### Liste der Positionszeichen:

- 1: Prüfvorrichtung
- 2: Traggerüst
- 3: Rahmenscharnier
- 4: Rahmen (schwenkbar)
- 5: Schwenkwinkel
- 6: Abschussvorrichtung
- 7: Geschoss (bzw. 7.1; 7.2; 7.3)
- 8: Äquivalent-Durchmesser
- 9: Abschusswinkel
- 10: Abschussrichtung (Pfeil; bzw. 10.1; 10.2; 10.3)
- 11: Beschussfläche
- 12: Testobjekt
- 13: Antrieb für Abschussvorrichtung
- 14: Abschusskraftregler
- 15: Geschwindigkeitsmessgerät
- 16: Prozessoreinheit
- 17: Signalleitung
- 18: Führungsholm für Hubstapler
- 19: Befestigungshaken für Kran
- 20: Windlasterzeugungs-Vorrichtung
- 21: Wasserstrahlerzeugungs-Vorrichtung
- 22: Thermostatisierungs-Vorrichtung
- 23: Vorratsbehälter
- 24: Geschosszuführleitung
- 25: Pneumatik-Antrieb (Kompressor)
- 26: Pneumatik-Leitung
- 30: Hebevorrichtung (extern)

## Patentansprüche

1. Prüfvorrichtung (1) zur Simulation eines realen Hagelbeschusses von Testobjekten (11), insbesondere von Bauteilen eines Gebäudes, mittels Geschossen (7), **dadurch gekennzeichnet, dass** mehrere Abschussvorrichtungen (6) zum simultanen Abschießen der Geschosse (7) vorgesehen sind, wobei für die Abschussvorrichtungen (6) eine Summenhagellast als Energieeintrag der Summe aller Geschosse sämtlicher Abschussvorrichtungen (6) je Beschussfläche (11) des Testobjekts (12) und je Zeiteinheit einstellbar ist.

2. Prüfvorrichtung (1) nach Anspruch 1, **dadurch gekennzeichnet, dass** für jede einzelne Abschussvorrichtung (6) jeweils eine individuelle Einzelhagellast als Energieeintrag der Summe aller Geschosse der jeweiligen Abschussvorrichtung (6) je Beschussfläche (11) des Testobjekts (12) und je Zeiteinheit einstellbar ist.

3. Prüfvorrichtung (1) nach Anspruch 1 oder 2, **dadurch gekennzeichnet, dass** mehrere Abschussvorrichtungen (6) voneinander beabstandet an einem schwenkbaren Rahmen (4), welcher parallel zur Beschussfläche (11) des Testobjektes (12) ausrichtbar ist, befestigt sind.

4. Prüfvorrichtung (1) nach Anspruch 3, **dadurch gekennzeichnet, dass** mindestens zehn Abschussvorrichtungen (6) je Quadratmeter Rahmenfläche gleichmäßig an dem schwenkbaren Rahmen (4) angeordnet sind.

5. Prüfvorrichtung (1) nach einem der Ansprüche 1 bis 4, **dadurch gekennzeichnet, dass** mit den Abschussvorrichtungen (6) Geschosse (7) mit unterschiedlichem Äquivalent-Durchmesser (8), vorzugsweise mit einem Äquivalent-Durchmesser (8) von 5 mm bis 200 mm, abschießbar sind.

6. Prüfvorrichtung (1) nach einem der Ansprüche 1 bis 5, **dadurch gekennzeichnet, dass** zumindest eine Abschussvorrichtung (6) in ihrem Abschusswinkel (9) in horizontaler und/oder in vertikaler Richtung verstellbar ist.

7. Prüfvorrichtung (1) nach einem der Ansprüche 1 bis 6, **dadurch gekennzeichnet, dass** die Abschussgeschwindigkeiten der Geschosse (7) jeder Abschussvorrichtung (6) einstellbar sind.

8. Prüfvorrichtung (1) nach einem der Ansprüche 1 bis 7, **dadurch gekennzeichnet, dass** die Abschussvorrichtungen (6) jeweils mit einem Antrieb (13), vorzugsweise mit einem Pneumatikantrieb, zum Erzeugen einer Abschusskraft verbunden sind.

9. Prüfvorrichtung (1) nach Anspruch 8, **dadurch gekennzeichnet, dass** die Abschussgeschwindigkeiten der Geschosse (7) mittels eines Abschusskraftreglers (14) je Abschussvorrichtung (6) individuell einstellbar sind.

10. Prüfvorrichtung (1) nach Anspruch 9 umfassend eine Prozessoreinheit (16), **dadurch gekennzeichnet, dass** vom Abschusskraftregler (14) Steuersignale zur Steuerung der Abschusskraft je Abschussvorrichtung (6) an die Prozessoreinheit (16) sendbar sind.

11. Prüfvorrichtung (1) nach einem der Ansprüche 1 bis 10, **dadurch gekennzeichnet, dass** zur Geschwindigkeitserfassung der Geschosse (7) zumindest ein Geschwindigkeitsmessgerät (15) vorgesehen ist.

12. Prüfvorrichtung (1) nach Anspruch 11, **dadurch gekennzeichnet, dass** vom zumindest einen Geschwindigkeitsmessgerät (15) die erfassten Geschwindigkeitsmesssignale an die Prozessoreinheit (16) sendbar sind.

13. Prüfvorrichtung (1) nach Anspruch 12, **dadurch gekennzeichnet, dass** die Prozessoreinheit (16) die erfassten Geschwindigkeitsmesssignale auswertet und anhand der Auswertung die Abschussgeschwindigkeiten der Abschussvorrichtungen (6) steuert.

14. Prüfvorrichtung (1) nach einem der Ansprüche 1 bis 13, **dadurch gekennzeichnet, dass** zumindest ein Vorratsbehälter (23) mit Geschossen (7) vorgesehen ist, welcher mit jeder Abschussvorrichtung (6) mit Geschosszuführleitungen (24) verbunden ist.

15. Prüfvorrichtung (1) nach Anspruch 14, **dadurch gekennzeichnet, dass** jede Abschussvorrichtung (6) automatisch mit jeweils einem Geschoss (7) seriell beladbar ist.

16. Prüfvorrichtung (1) nach einem der Ansprüche 1 bis 15, **dadurch gekennzeichnet, dass** zum parallelen Abfahren der Beschussfläche (11) eines Testobjekts (12) die Prüfvorrichtung (1) an einer Hebevorrichtung (30) befestigbar ist.

17. Prüfvorrichtung (1) nach einem der Ansprüche 1 bis 16, **gekennzeichnet durch** zumindest eine weitere Vorrichtung zur Überlagerung mit der Hagellast, ausgewählt aus der Gruppe:
- statische Windlasterzeugungs-Vorrichtung (20),
- dynamische Windlasterzeugungs-Vorrichtung (20),
- Wasserstrahlerzeugungs-Vorrichtung (21),
- Thermostatisierungs-Vorrichtung (22).

## Claims

1. A test device (1) for the simulation of a real hail bombardment of test objects (11), in particular of parts of a building, by means of projectiles (7), **characterized in that** several firing devices (6) are provided for simultaneously firing the projectiles (7), wherein for the firing devices (6) the total hail load may be adjusted as energy yield of the sum of all projectiles of all firing devices (6) per bombardment area (11) of the test object (12) and per time unit.

2. A test device (1) according to claim 1, **characterized in that** for each individual firing device (6) there may be adjusted respectively an individual single hail load as energy yield of the sum of all projectiles of the respective firing device (6) per bombardment area (11) of the test object (12) and per time unit.

3. A test device (1) according to claim 1 or 2, **characterized in that** several firing devices (6) are fixed, spaced apart from each other, at a pivotable frame (4), which may be aligned in parallel to the bombardment area (11) of the test object (12).

4. A test device (1) according to claim 3, **characterized in that** at least ten firing devices (6) are arranged per square metre frame area uniformly at the pivotable frame (4).

5. A test device (1) according to any of claims 1 to 4, **characterized in that** there may be fired projectiles (7) having different equivalent diameters (8), preferably having an equivalent diameter (8) from 5 mm to 200 mm, by the firing devices (6).

6. A test device (1) according to any of claims 1 to 5, **characterized in that** at least one firing device (6) is adjustable in the firing angle (9) thereof in the horizontal and/or vertical direction.

7. A test device (1) according to any of claims 1 to 6, **characterized in that** the firing velocities of the projectiles (7) of each firing device (6) may be adjusted.

8. A test device (1) according to any of claims 1 to 7, **characterized in that** the firing devices (6) each are connected with a drive (13), preferably with a pneumatic drive, in order to generate a firing force.

9. A test device (1) according to claim 8, **characterized in that** the firing velocities of the projectiles (7) are individually adjustable by means of a firing force regulator (14) for each firing device (6).

10. A test device (1) according to claim 9, comprising a processor unit (16), **characterized in that** control signals for controlling the firing force may be sent by the firing force regulator (14) for each firing device (6) to the processor unit (16).

11. A test device (1) according to any of claims 1 to 10, **characterized in that** there is provided at least one velocity measuring tool (15) for determination of the velocity of the projectiles (7).

12. A test device (1) according to claim 11, **characterized in that** the determined velocity measuring signals may be sent to the processor unit (16) by the at least one velocity measuring tool (15).

13. A test device (1) according to claim 12, **characterized in that** the processor unit (16) evaluates the velocity measuring signals determined and controls the firing velocities of the firing devices (6) on the basis of the evaluation.

14. A test device (1) according to any of claims 1 to 13, **characterized in that** there is provided at least one storage container (23) with projectiles (7), which is connected with each firing device (6) by way of projectile feed lines (24).

15. A test device (1) according to claim 14, **characterized in that** each firing device (6) may be automatically loaded in series with respectively one projectile (7).

16. A test device (1) according to any of claims 1 to 15, **characterized in that** the test device (1) may be attached to a lifting device (30) for scanning in parallel the bombardment area (11) of a test object (12).

17. A test device (1) according to any of claims 1 to 16, **characterized by** at least one further device for overlapping with the hail load, selected from the group consisting of:
- static wind load generating device (20),
- dynamic wind load generating device (20),
- water beam generating device (21),
- thermostatic control device (22).

## Revendications

1. Dispositif de contrôle (1) pour la simulation d'une averse réelle de grêle sur des objets tests (11), en particulier sur des éléments structurels d'un bâtiment, au moyen de projectiles (7), **caractérisé en ce qu'**il est prévu plusieurs dispositifs de lancement (6) pour le lancement simultané de projectiles (7), et pour les dispositifs de lancement (6) la charge totale de grêle, sous forme d'apport d'énergie de la somme de tous les projectiles de tous les dispositifs de lancement (6), est réglable selon la surface concernée (11) de l'objet test (12) et par unité de temps.

2. Dispositif de contrôle (1) selon la revendication 1, **caractérisé en ce que** pour chaque dispositif de lancement individuel (6), une charge individuelle de grêle, sous forme d'apport d'énergie de la somme de tous les projectiles du dispositif de lancement respectif (6), est réglable selon la surface concernée (11) de l'objet test (12) et par unité de temps.

3. Dispositif de contrôle (1) selon la revendication 1 ou 2, **caractérisé en ce que** plusieurs dispositifs de lancement (6) sont fixés à distance les uns des autres sur un cadre pivotant (4) qui peut être orienté parallèlement à la surface concernée (11) de l'objet test (12).

4. Dispositif de contrôle (1) selon la revendication 3, **caractérisé en ce qu'**au moins dix dispositifs de lancement (6) sont agencés pour chaque mètre carré de surface du cadre, de façon régulière sur le cadre pivotant (4).

5. Dispositif de contrôle (1) selon l'une des revendications 1 à 4, **caractérisé en ce qu'**au moyen des dispositifs de lancement (6) il est possible de lancer des projectiles (7) avec un diamètre équivalent différent (8), de préférence avec un diamètre équivalent (8) de 5 mm à 200 mm.

6. Dispositif de contrôle (1) selon l'une des revendications 1 à 5, **caractérisé en ce qu'**au moins un dispositif de lancement (6) est réglable en direction horizontale et/ou en direction verticale pour ce qui concerne son angle de lancement (9).

7. Dispositif de contrôle (1) selon l'une des revendications 1 à 6, **caractérisé en ce que** les vitesses de lancement des projectiles (7) de chaque dispositif de lancement (6) sont réglables.

8. Dispositif de contrôle (1) selon l'une des revendications 1 à 7, **caractérisé en ce que** les dispositifs de lancement (6) sont respectivement reliés à un entraînement (13), de préférence à un entraînement pneumatique, pour engendrer une force de lancement.

9. Dispositif de contrôle (1) selon la revendication 8, **caractérisé en ce que** les vitesses de lancement des projectiles (7) sont réglables au moyen d'un régulateur de force de lancement (14) de manière individuelle pour chaque dispositif de lancement (6).

10. Dispositif de contrôle (1) selon la revendication 9, comprenant une unité à processeur (16), **caractérisé en ce que** des signaux de commande peuvent être émis depuis le régulateur de force de lancement (14) vers l'unité à processeur (16) pour commander la force de lancement de chaque dispositif de lancement (6).

11. Dispositif de contrôle (1) selon l'une des revendications 1 à 10, **caractérisé en ce qu'**il est prévu au moins un appareil de mesure de vitesse (15) pour la détection de vitesse des projectiles (7).

12. Dispositif de contrôle (1) selon la revendication 11, **caractérisé en ce que** les signaux de mesure de vitesse saisis par au moins un appareil de mesure de vitesse (15) peuvent être émis vers l'unité à processeur (16).

13. Dispositif de contrôle (1) selon la revendication 12, **caractérisé en ce que** l'unité à processeur (16) évalue les signaux de mesure de vitesse saisis et commande, en fonction de l'évaluation, les vitesses de lancement des dispositifs de lancement (6).

14. Dispositif de contrôle (1) selon l'une des revendications 1 à 13, **caractérisé en ce qu'**il est prévu au moins un récipient de réserve (23) avec des projectiles (7), ce récipient étant relié par des conduites d'amenée de projectiles avec chaque dispositif de lancement (6).

15. Dispositif de contrôle (1) selon la revendication 14, **caractérisé en ce que** chaque dispositif de lancement (6) est susceptible d'être automatiquement chargé en série avec un projectile respectif (7).

16. Dispositif de contrôle (1) selon l'une des revendications 1 à 15, **caractérisé en ce que** pour le balayage parallèle de la surface concernée (11) d'un objet test (12), le dispositif de contrôle (1) est susceptible d'être fixé sur un dispositif de levage (30).

17. Dispositif de contrôle (1) selon l'une des revendications 1 à 16, **caractérisé par** au moins un autre dispositif destiné à la superposition sur la charge de grêle, choisi parmi le groupe :
- dispositif statique de génération d'une charge aéraulique (20),
- dispositif dynamique de génération d'une charge aéraulique (20),
- dispositif de génération de jet d'eau (21),
- dispositif de conditionnement thermostatique (22).
